# EUROPEAN PATENT APPLICATION

(11) **EP 4 672 455 A1**
(43) Date of publication of application: **31.12.2025**
(21) Application number: 25183059.2
(22) Date of filing: 16.06.2025
(51) Int. Cl.: H01M 50/207, H01M 50/209, H01M 50/242, H01M 50/244, H01M 50/249, H01M 50/258, H01M 50/264, H01M 50/289, H01M 50/291, E02F 9/20, E02F 9/08, H01M 50/204, E02F 3/32

(54) **BATTERY ASSEMBLY OF CONSTRUCTION MACHINE AND METHOD FOR ASSEMBLING THE SAME**

(30) Priority: 28.06.2024 KR 20240085717
(71) Applicant: Volvo Construction Equipment AB, 631 85 Eskilstuna (SE)
(72) Inventor: KIM, Moo Jun, 51710 GYEONGSANGNAM-DO (KR)
(74) Representative: Kransell & Wennborg KB

(57) **Abstract**

An aspect of the present disclosure provides a battery assembly of a construction machine including a first rack structure including a plurality of first transverse frames which are fixed to a frame of an upper swing structure of the construction machine, and disposed to be spaced apart from each other in a forward/rearward direction of the construction machine, and a plurality of first longitudinal frames which connect the plurality of first transverse frames to each other, and are disposed to be spaced apart from each other in a leftward/rightward direction of the construction machine, and first batteries mounted between sequential pairs of the first longitudinal frames, respectively, wherein opposite sides of the first batteries are fastened to the first longitudinal frames.

## Description

### Technical Field

The present disclosure generally relates to a construction machine. In a specific aspect, the present disclosure relates to a battery assembly of a construction machine, and a method for assembling the same. The present disclosure may be applied to large vehicles, such as trucks, buses, and construction equipment. Although the present disclosure may be described for a specific vehicle, the present disclosure is not limited to any specific vehicle.

### Background

A construction machine performs various tasks, such as an excavation work to dig at construction sites, a loading work to transport soil, a digging work to create foundations, a crushing work to demolish buildings, a site-preparation work to clear and grub the ground surface, and a leveling work to make the ground surface even.

In general, the construction machines may be classified into engine type machines that are operated by using fossil fuels, such as diesel, and motor-driven type machines that are operated by electric power of batteries that may be rapidly charged externally, depending on the operation methods thereof.

The engine type construction machines may carry out a construction work by using power generated by an internal combustion engine, and may cause pollution problems and environmental problems, such as emission gas and noise generated by the internal combustion engine. Accordingly, the development of construction machines that do not cause pollution, especially motor-driven construction machines using electric power of batteries, is underway.

Meanwhile, when the batteries are assembled in the motor-driven construction machine, the batteries generally are fastened to an upper surface or a bottom surface of a planar plate in the height direction, and the planar plate may have a problem in a planarity thereof due to a deformation thereof during welding. When the batteries are forcibly assembled in the plate, a high tensile load may occur when bolts are fastened, and thus, great stress occurs in the battery assembly and the batteries may be damaged.

In addition, conventionally, the batteries are mounted on a frame of an upper structure one by one, and thus there is a limit in that the productivity deteriorates.

### Summary

According to a first aspect of the present disclosure, provided is a battery assembly of a construction machine, comprising a first rack structure including a plurality of first transverse frames that are fixed to a frame of an upper structure of a construction machine, and disposed to be spaced apart from each other in a forward/rearward direction of the construction machine, and a plurality of first longitudinal frames that connect the plurality of first transverse frames to each other, and are disposed to be spaced apart from each other in a leftward/rightward direction of the construction machine, and first batteries mounted between sequential pairs of the first longitudinal frames, respectively, wherein opposite sides of the first batteries are fastened to the first longitudinal frames. The first aspect of the present disclosure may pursue a battery assembly of a construction machine, in which the batteries are laterally fastened to the rack structure. The technical advantage is that a possibility of damage to the batteries is reduced by preventing a load due to an unbalance of a planarity as in the conventional technology because sides of the batteries are coupled to the longitudinal frames.

Alternatively, in some examples, side brackets may be fastened to side surfaces or opposite side surfaces of the first batteries, and the side brackets may be fastened to the first longitudinal frames. The technical advantage is that when a load is applied, the batteries are less likely to be damaged because a primary deformation occurs in the side brackets of the batteries.

Alternatively, in some examples, the side brackets may be fastened to side surfaces of some of the first batteries and guide bolt holes may be formed on the other side surfaces thereof, guide grooves aligned with the guide bolt holes may be formed in the first longitudinal frames corresponding to the opposite side surfaces of the first batteries, and guide bolts may be inserted along the guide bolt holes and the guide grooves.

Alternatively, in some examples, the first rack structure may include a plurality of vertical frames that are fastened to the plurality of first transverse frame vertically thereto.

Alternatively, in some examples, the battery assembly may include a second rack structure including a plurality of second transverse frames that are fastened to upper portions of the vertical frames and disposed to be spaced apart from each other in the forward/rearward direction of the construction machine, and a plurality of second longitudinal frames that connect the plurality of second transverse frames to each other and are disposed to be spaced apart from each other in the leftward/rightward direction of the construction machine, and second batteries mounted between sequential pairs of the second longitudinal frames, respectively, and opposite sides of the second batteries may be fastened to the second longitudinal frames.

Alternatively, in some examples, side brackets may be fastened to side surfaces of the second batteries, and the side brackets may be fastened to the second longitudinal frames.

Alternatively, in some examples, guide bolt holes may be formed on the other side surfaces of the second batteries, guide grooves aligned with the guide bolt holes may be formed in the second longitudinal frames corresponding to the opposite side surfaces of the second batteries, and guide bolts may be inserted along the guide bolt holes and the guide grooves.

Alternatively, in some examples, the first rack structure may further include horizontal frames that connect the first transverse frames to each other and support bottom surfaces of the first longitudinal frames.

According to a second aspect of the present disclosure, a process of preparing the first rack structure including the plurality of first transverse frames that are disposed to be spaced apart from each other in the forward/rearward direction of the construction machine, and the plurality of first longitudinal frames that connect the plurality of first transverse frames to each other and are disposed to be spaced apart from each other in the leftward/rightward direction of the construction machine, and the plurality of vertical frames that are fastened to the plurality of first transverse frames vertically thereto, a process of preparing the first batteries in which the side brackets are fastened to the side surfaces or the opposite side surfaces thereof, a process of inserting the first batteries between sequential pairs of the first longitudinal frames, respectively, in a vertical direction, and a process of fastening the opposite sides of the first batteries to the first longitudinal frames may be included. The second aspect of the present disclosure may pursue a method for assembling a battery assembly, in which batteries are laterally fastened to the rack structure. The technical advantage is that when a load is applied, the batteries are not likely to be damaged because a primary deformation occurs in the side brackets, and the sides of the batteries are coupled to the longitudinal frames directly or through the brackets to prevent a load caused by an imbalance in planarity as in the conventional technology, thereby reducing a possibility of damage to the batteries.

Alternatively, in some examples, the method may further include a process of preparing the second rack structure including the plurality of second transverse frames that are disposed to be spaced apart from each other in the forward/rearward direction of the construction machine, and the plurality of second longitudinal frames that connect the plurality of second transverse frames to each other and are disposed to be spaced apart from each other in the leftward/rightward direction of the construction machine, a process of preparing the second batteries, in which the side brackets are fastened to side surfaces thereof, a process of inserting the second batteries between sequential pairs of the second longitudinal frames, respectively, in the vertical direction and a process of fastening opposite sides of the second batteries to the second longitudinal frames.

Alternatively, in some examples, the method may further include a process of fastening the second transverse frames of the second rack structure to the vertical frames of the first rack structure.

Alternatively, in some examples, the method may further include a process of assembling the first rack structure in a frame of an upper swing structure of the construction machine.

The aspects, appended claims, and/or examples disclosed above and later may be appropriately combined with each other as is apparent to an ordinary person skilled in the art.

Additional features and advantages are disclosed in the following description, claims, and drawings and will be recognized in part by carrying out the contents that are readily apparent to an ordinary person skilled in the art or the disclosure as described herein.

### Brief Description of the Drawings

Referring to the accompanying drawings, a more detailed description of aspects of the present disclosure cited as examples will follow hereinafter:
FIG. 1 is a perspective view illustrating a construction machine according to an aspect of the present disclosure;
FIG. 2 is a perspective view illustrating a frame of an upper swing structure, on which a battery assembly of a construction machine is mounted, according to an aspect of the present disclosure;
FIG. 3 is a perspective view illustrating a battery assembly of a construction machine according to an aspect of the present disclosure;
FIG. 4 is another perspective view of a battery assembly of a construction machine according to an aspect of the present disclosure;
FIG. 5 is an exploded perspective view of a rack structure according to an aspect of the present disclosure;
FIG. 6 is a perspective view of a battery according to an aspect of the present disclosure;
FIG. 7 is a perspective view of a side bracket according to an aspect of the present disclosure;
FIG. 8 is an enlarged exploded perspective view of portion A of FIG. 3;
FIG. 9 is a view illustrating a state of assembling a first battery in a first rack structure according to an aspect of the present disclosure;
FIG. 10 is a view illustrating a state of assembling a second rack structure, in which second batteries are assembled, to the first rack structure according to an aspect of the present disclosure; and
FIGS. 11 to 13 are flowcharts of a method for assembling a battery assembly of a construction machine according to an embodiment of the present disclosure.

### Detailed Description

The aspects that will be described below represent information that is necessary to enable an ordinary person skilled in the art to carry out the present disclosure.

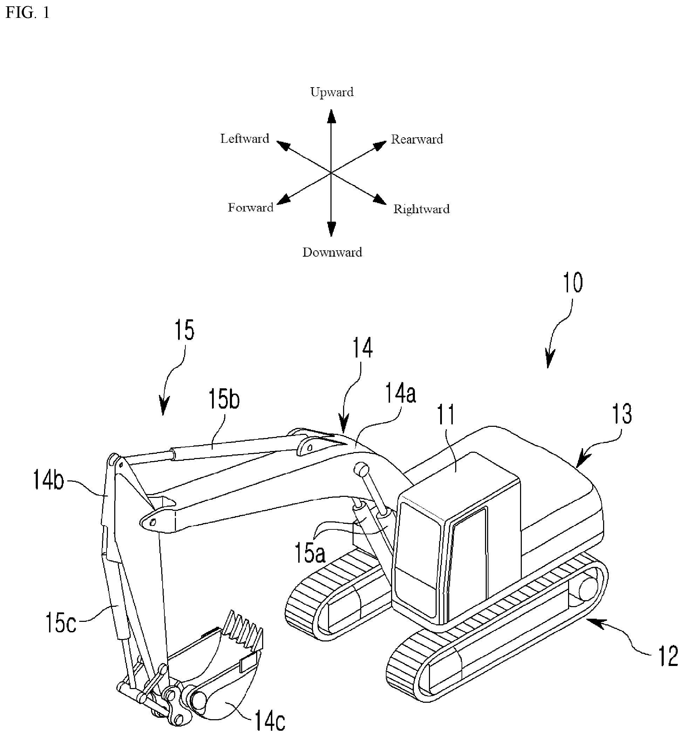

FIG. 1 is a perspective view illustrating a construction machine according to an aspect of the present disclosure.

Referring to FIG. 1, a construction machine 10, such as an excavator, includes a cab 11, a undercarriage 12, an upper swing structure 13 that is swingably installed on the undercarriage 12, a working device 14 that is installed on the upper swing structure 13 to operate in an upward/downward direction, and a hydraulic actuator 15.

The working device 14 includes a boom 14a that is formed of multiple joints, and has a rear end of which is rotatably supported on the upper swing structure 13, an arm 14b which has a rear end of which is rotatably supported on a tip of the boom 14a, and a bucket 14c as an attachment that is rotatably installed on a tip side of the arm 14b. The hydraulic actuator 15 includes a boom actuator 15a, an arm actuator 15b, and a bucket actuator 15c. Furthermore, when a hydraulic oil is supplied in response to the manipulation of a manipulation lever by an operator, the boom actuator 15a, the arm actuator 15b, and the bucket actuator 15c operate the boom 14a, the arm 14b, and the bucket 14c, respectively.

In addition to the above-described bucket 14c, there are various attachments, such as a breaker, a drill, a grab, a crusher, a tilt-rotator, a grapple, and a thumb bucket, and an optimum attachment may be attached to the arm 14b depending on the types of specific tasks that are to be performed.

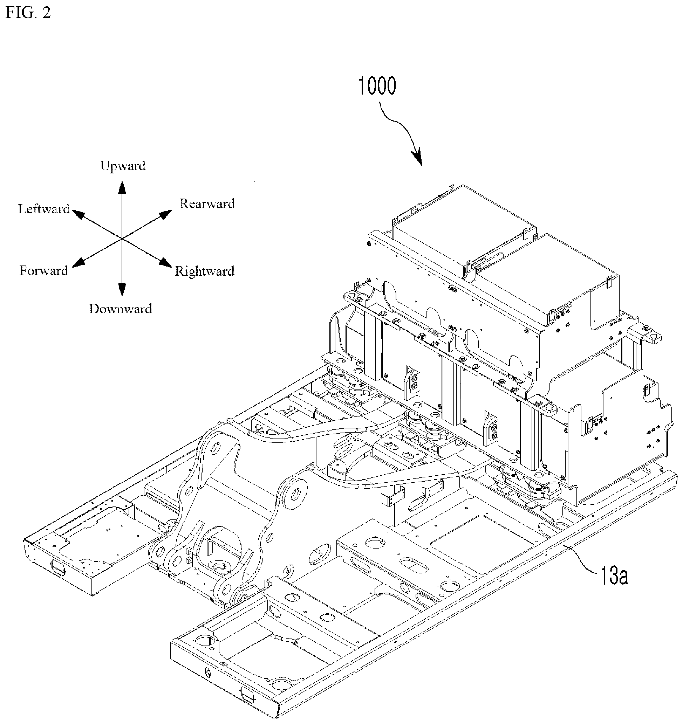

FIG. 2 is a perspective view illustrating a frame of an upper swing structure, on which a battery assembly of a construction machine is mounted, according to an aspect of the present disclosure.

Referring to FIG. 2, a frame 13a may define a basic frame structure of the upper swing structure, and may be mounted on the undercarriage to be rotated by 360 degrees, and the working device may be connected to the front thereof. A battery assembly 1000 may be mounted on a rear end of the frame 13a.

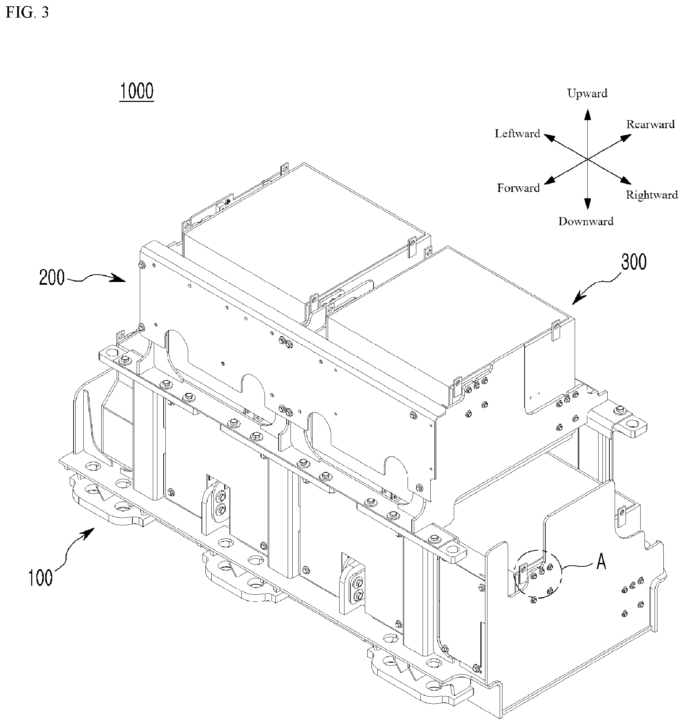

FIG. 3 is a perspective view illustrating a battery assembly of a construction machine according to an aspect of the present disclosure.

Referring to FIG. 3, the battery assembly 1000 of the construction machine according to an aspect of the present disclosure may include rack structures 100 and 200 and batteries 300.

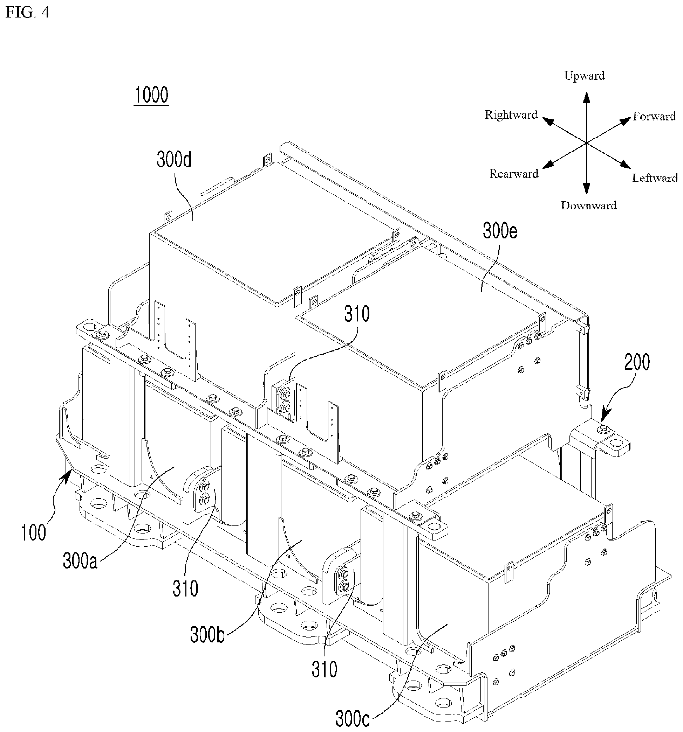

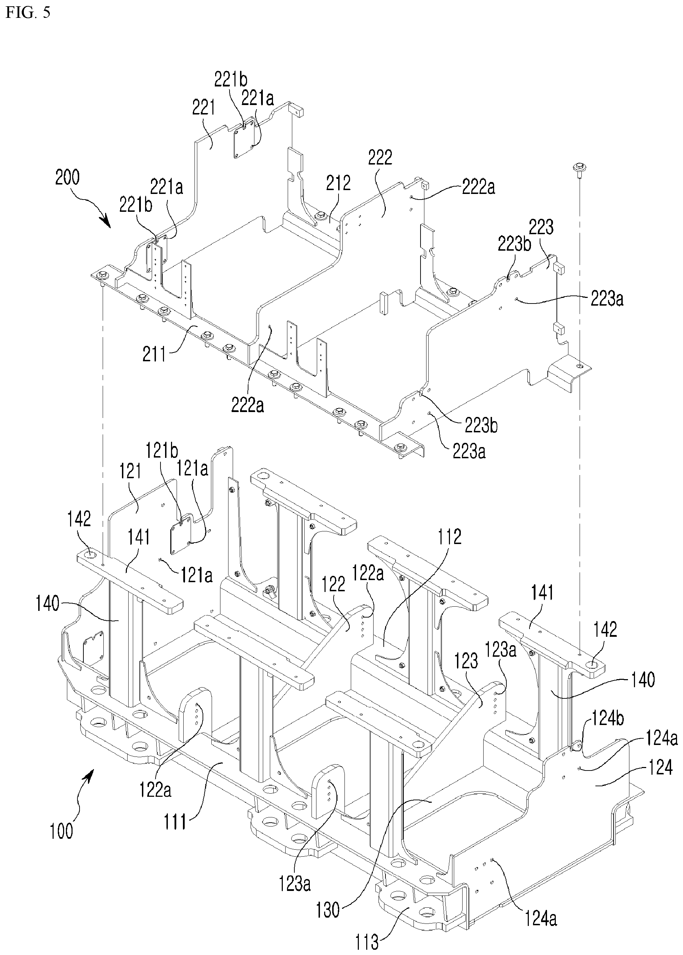

FIG. 4 is another perspective view of a battery assembly of a construction machine according to an aspect of the present disclosure, and FIG. 5 is an exploded perspective view of a rack structure according to an aspect of the present disclosure.

Referring to FIGS. 4 and 5, the rack structures 100 and 200 may include a first rack structure 100 that is fastened onto the frame of the upper swing structure and a second rack structure 200 that is fixed to an upper portion of the first rack structure 100.

The first rack structure 100 may include a plurality of first transverse frames 111 and 112 that are disposed to be spaced apart from each other in a forward/rearward direction of the construction machine, and a plurality of first longitudinal frames 121, 122, 123, and 124 that connect the plurality of first transverse frames 111 and 112 to each other and are disposed to be spaced apart from each other in a leftward/rightward direction of the construction machine.

Coupling parts 113 that are coupled to the frame of the upper swing structure may be formed in the first transverse frames 111 and 112.

The first longitudinal frames 121, 122, 123, and 124 extend in the forward/rearward direction of the construction machine, and front and rear opposite ends thereof are fixed to the first transverse frames 111 and 112, respectively. The first longitudinal frames 121, 122, 123, and 124 may be disposed to be spaced apart from each other by approximately left and right widths of the first batteries 300a, 300b, and 300c, and the first batteries 300a, 300b, and 300c may be mounted between sequential pairs of the first longitudinal frames 121, 122, 123, and 124, respectively. In this way, spaces, in which the first batteries 300a, 300b, and 300c are mounted, may be partitioned by the first transverse frames 111 and 112 and the first longitudinal frames 121, 122, 123, and 124.

Meanwhile, the number of the first batteries 300a, 300b, and 300c may be increased or decreased as necessary, and correspondingly, the number of the first longitudinal frames 121, 122, 123, and 124 may also be increased or decreased.

The first longitudinal frames 121, 122, 123, and 124 may extend by a certain length in an upward/downward direction of the construction machine so that the first batteries 300a, 300b, and 300c or the side brackets 310 may be fastened thereto. A plurality of fastening holes 121a, 122a, 123a, and 124a, through which surfaces of the first batteries 300a, 300b, and 300c or the side brackets of the first batteries 300a, 300b, and 300c may be fastened, may be formed on one or more of left side surfaces and right side surfaces of the first longitudinal frames 121, 122, 123, and 124. The fastening holes 121a and 124a of the first longitudinal frames 121 and 124 may be formed to be distributed over entire areas of the first longitudinal frames 121 and 124, and the fastening holes 122a and 123a of the first longitudinal frames 122 and 123 may be formed at opposite ends in the forward/rearward direction.

Guide grooves 121b and 124b that are aligned with the guide bolt holes of the first batteries 300a, 300b, and 300c may be formed at upper ends of the first longitudinal frames 121 and 124, which are located at left and right opposite ends of the first longitudinal frames 121, 122, 123, and 124.

The first rack structure 100 may further include horizontal frames 130 that connect the first transverse frames 111 and 112 to each other and support bottom surfaces of the first longitudinal frames 121, 122, 123, and 124.

The first rack structure 100 may further include a plurality of vertical frames 140 that are fixed to upper surfaces of the first transverse frames 111 and 112 vertically thereto in the upward/downward direction, respectively. Support surfaces 141, which extend in the leftward/rightward direction, and to which the second rack structure 200 is fastened, are formed at upper portions of the vertical frames 140. Lifting holes 142 for lifting the battery assembly may be formed in the support surfaces 141 located at the left and right opposite ends.

The second rack structure 200 may include a plurality of second transverse frames 211 and 212 that are disposed to be spaced apart from each other by a predetermined distance in the forward/rearward direction of the construction machine, and a plurality of second longitudinal frames 221, 222, and 223 that connect the plurality of second transverse frames 211 and 212 to each other and are disposed to be spaced apart from each other in the leftward/rightward direction of the construction machine.

The second transverse frames 211 and 212 are fastened to the support surfaces 141 of the vertical frames 140.

The second longitudinal frames 221, 222, and 223 extend in the forward/rearward direction of the construction machine, and front and rear opposite ends thereof are fixed to the second transverse frames 211 and 212, respectively. The second longitudinal frames 221, 222, and 223 may be disposed to be spaced apart from each other by approximately left and right widths of the second batteries 300d and 300e, and the second batteries 300d and 300e may be mounted between sequential pairs of the second longitudinal frames 221, 222, and 223, respectively. In this way, spaces, in which the second batteries 300d and 300e are mounted, may be partitioned by the second transverse frames 211 and 212 and the second longitudinal frames 221, 222, and 223.

Meanwhile, the number of the second batteries 300d and 300e may be increased or decreased as necessary, and correspondingly, the number of the second longitudinal frames 221, 222, and 223 may also be increased or decreased.

The second longitudinal frames 221, 222, and 223 may extend by a certain length in an upward/downward direction of the construction machine so that the second batteries 300d and 300e or the side brackets 310 may be fastened thereto. Furthermore, a plurality of fastening holes 221a, 222a, and 223a, through which surfaces of the second batteries 300d and 300e or the side brackets 310 may be fastened, may be formed on one or more of left side surfaces and right side surfaces of the second longitudinal frames 221, 222, and 223. The fastening holes 221a and 223a of the second longitudinal frames 221 and 223 may be formed to be distributed over entire areas of the second longitudinal frames 221 and 223, and the fastening holes 222a of the second longitudinal frames 222 may be formed at opposite ends in the forward/rearward direction.

Guide grooves 221b and 223b that are aligned with the guide bolt holes of the second batteries 300d and 300e may be formed at upper ends of the second longitudinal frames 221 and 223 located at the left and right opposite ends among the second longitudinal frames 221, 222, and 223.

Meanwhile, when the batteries are assembled in the motor-driven construction machine, the batteries are generally fastened to an upper surface or a bottom surface of a planar plate in a height direction, and the planar plate may have a problem in a planarity thereof due to a deformation thereof during welding. When the batteries are forcibly assembled in the plate, a high tensile load may occur when bolts are fastened, and thus, great stress occurs in the battery assembly and the batteries may be damaged.

Accordingly, in the present disclosure, opposite sides of the batteries are fastened to the longitudinal frames. To this end, the side brackets are fastened to side surfaces or opposite side surfaces of the batteries.

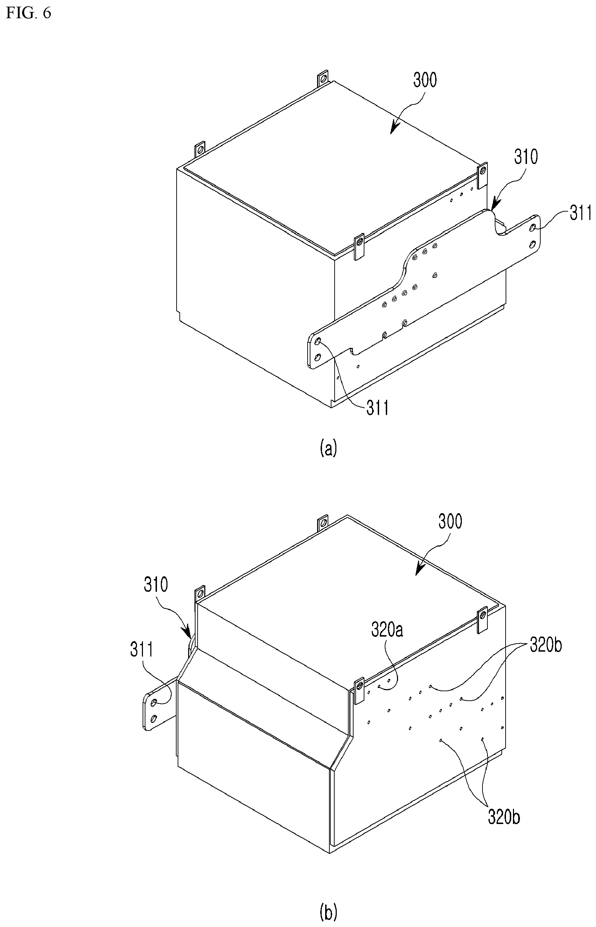

FIG. 6 is a perspective view of a battery according to an aspect of the present disclosure.

Referring to FIG. 6, the side brackets 310 are fastened to side surfaces of the batteries 300. The side brackets 310 extend in the forward/rearward direction of the construction machine, and are formed to have a length corresponding to a length of the longitudinal frames in the forward/rearward direction.

Referring to FIGS. 5 and 6, bracket holes 311 corresponding to the fastening holes 122a, 123a, and 222a of the first and second longitudinal frames 122, 123, and 222 may be formed at opposite ends of the side brackets 310. **In** a state in which the coupling holes 122a, 123a, and 222a and the bracket holes 311 are aligned with each other, the side brackets 310 may be fastened to the first and second longitudinal frames 122, 123 and 222 by bolts or the like. **In** this case, the fastening operation may be performed in a state in which a shim member having a bent rod shape is provided between the first and second longitudinal frames 122, 123, and 222 and the side brackets 310.

Guide bolt holes 320a corresponding to the guide grooves 121b, 124b, 221b and 223b of the first and second longitudinal frames 121, 124, 221 and 223 may be formed on opposite side surfaces of the batteries 300.

Furthermore, coupling holes 320b corresponding to the fastening holes 121a, 124a, 221a, and 223a of the first and second longitudinal frames 121, 124, 221, and 223 may be formed on the other side surfaces of the batteries 300. In a state in which the fastening holes 121a, 124a, 221a, and 223a and the coupling holes 320b are aligned with each other, the batteries 300 may be fastened to the first and second longitudinal frames 121, 124, 221 and 224 by bolts or the like.

Meanwhile, in the case of a first battery disposed at the center of the first rack structure, the side brackets 310 may be fastened to the opposite side surfaces thereof, and the opposite sides of the first battery may both be fastened to the first longitudinal frames 122 and 123 through the side brackets 310.

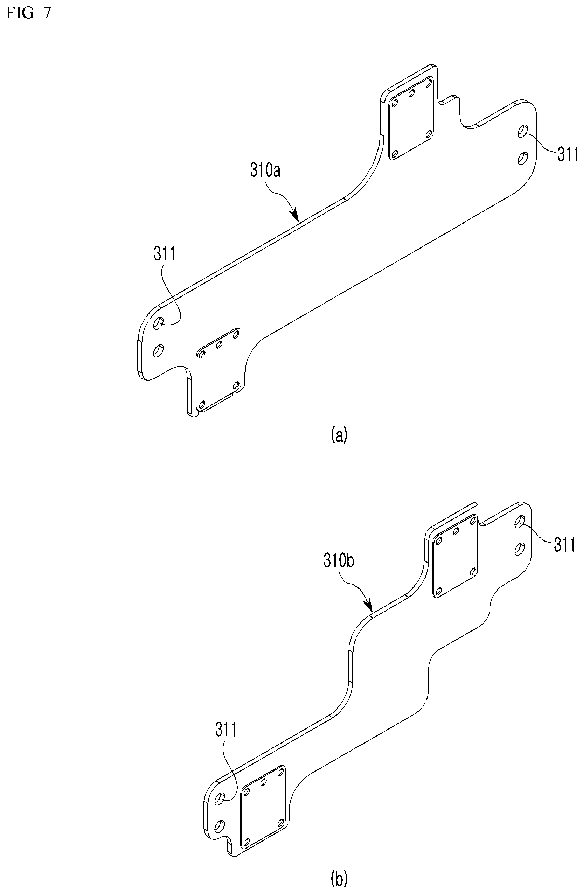

FIG. 7 is a perspective view of a side bracket according to an aspect of the present disclosure.

Referring to FIGS. 6 and 7, the shapes of the side brackets 310, 310a, and 310b may be formed partially different depending on the shapes and positions of the longitudinal frames.

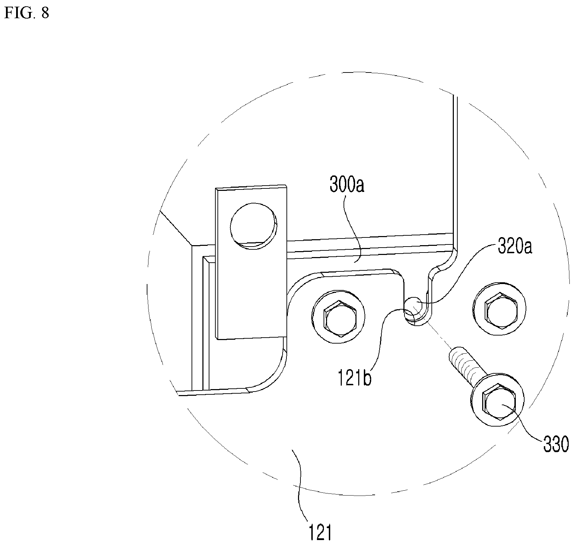

FIG. 8 is an enlarged exploded perspective view of portion A of FIG. 3.

Referring to FIG. 8, the guide bolt 330 is inserted into the guide groove 121b and the guide bolt hole 320a to limit the position and movement of the first battery 300a in a state in which the guide groove 121b of the first longitudinal frame 121 and the guide bolt hole 320a are aligned with each other. That is, the guide bolts 330 may serve as alignment members when the batteries 300 are assembled in and fixed to the first and second rack structures.

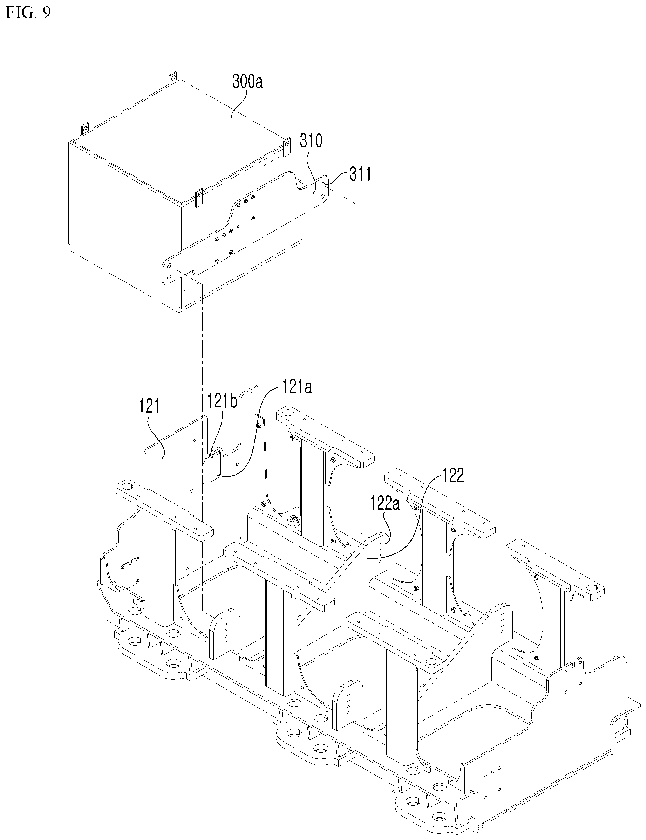

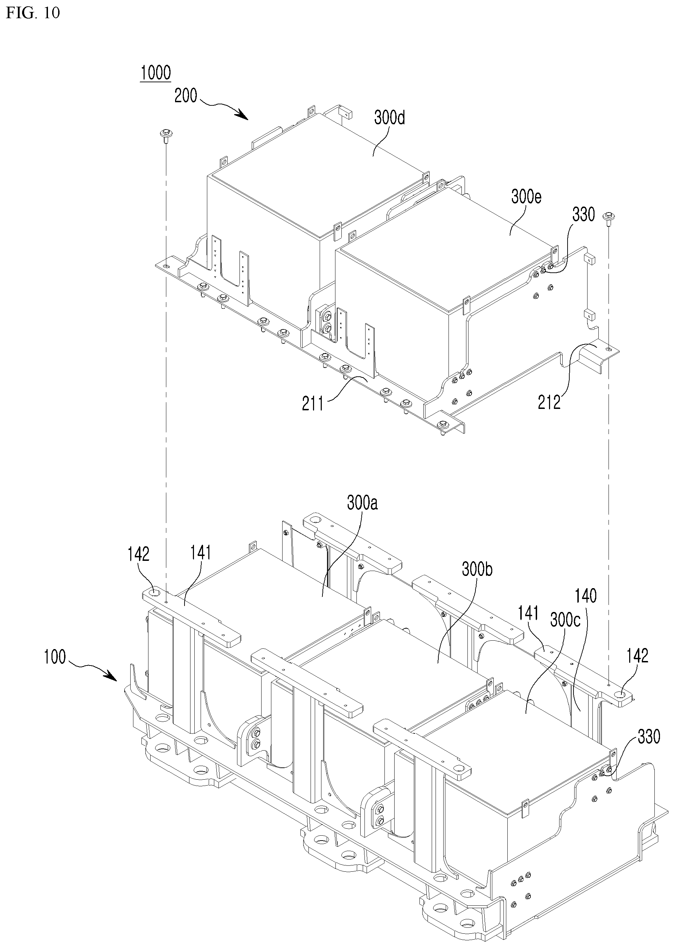

FIG. 9 is a view illustrating a state, in which the first batteries are assembled in the first rack structure, according to an aspect of the present disclosure, and FIG. 10 is a view illustrating a state of assembling a second rack structure, in which the second batteries are assembled, to the first rack structure, according to an aspect of the present disclosure.

Hereinafter, referring to FIGS. 8 to 10 together, a method of assembling a battery assembly of a construction machine according to an embodiment of the present disclosure will be described.

Referring to FIG. 9, the first battery 300a, in which the side bracket 310 is fastened to one side surface thereof, is inserted in a vertical direction between the first longitudinal frames 121 and 122.

As illustrated in FIG. 8, when the guide bolt hole 320a of the other side surface of the first battery 300a and the guide groove 121b of the first longitudinal frame 121 are aligned on a straight line, the guide bolt 330 is inserted to limit the position and movement of the first battery 300a.

Furthermore, in a state in which the fastening hole 122a of the first longitudinal frame 122 and the bracket hole 311 of the first battery 300a are aligned with each other, the side bracket 310 is fastened to the first longitudinal frame 122 by bolts or the like. Furthermore, in a state, in which the fastening hole 121a of the first longitudinal frame 121 and the coupling hole of the first battery 300a are aligned with each other, the first battery 300a is fastened to the first longitudinal frame 121 by bolts or the like.

In this case, the fastening operation may be performed in a state in which a shim member having a bent rod shape is provided between the first longitudinal frames 121 and 122 and the side brackets 310.

In the same manner, the remaining first batteries 300b and 300c are fastened in the first rack structure 100. Meanwhile, in the case of the first battery 300b disposed at the center, the side brackets 310 are fastened to opposite side surfaces thereof. Accordingly, opposite sides of the first battery 300b are both fastened to the first longitudinal frames 122 and 123 through the side brackets 310.

Then, in the same manner, the second batteries 300d and 300e are fastened in the second rack structure 200.

Referring to FIG. 10, the second rack structure 200, on which the second batteries 300d and 300e are mounted, is fastened to the first rack structure 100, on which the first batteries 300a, 300b, and 300c are mounted. Specifically, the second transverse frames 211 and 212 of the second rack structure 200 are aligned with and then fastened to the support surfaces 141 located on the upper surfaces of the vertical frames 140 on the first rack structure 100.

Thereafter, the battery assembly 1000 is assembled in the frame of the upper swing structure by using the lifting holes 142 formed on the support surfaces 141.

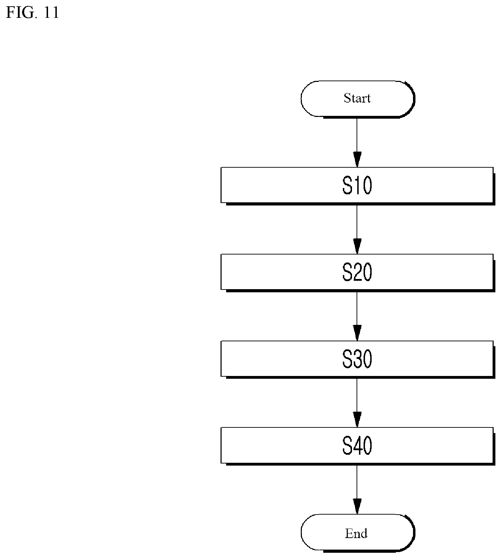

FIGS. 11 to 13 are flowcharts of a method for assembling a battery assembly of a construction machine according to an embodiment of the present disclosure.

Hereinafter, referring to FIGS. 11 to 13, a method of assembling a battery assembly of a construction machine according to an embodiment of the present disclosure will be described.

Referring to FIG. 11, a method for assembling a battery assembly of a construction machine according to an embodiment of the present disclosure includes a process (S10) of assembling the first batteries in the first rack structure, a process (S20) of assembling the second batteries in the second rack structure, a process (S30) of fastening the second transverse frames of the second rack structure to the vertical frames of the first rack structure, and a process (S40) of assembling the first rack structure in the frame of the upper swing structure of the construction machine.

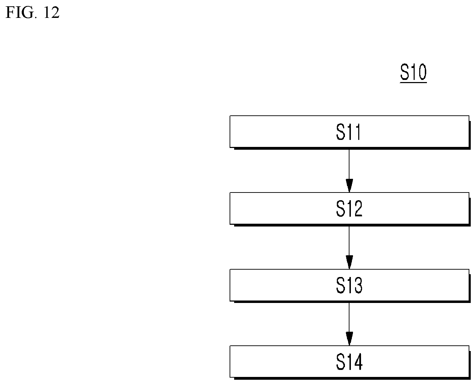

Referring to FIG. 12, the process (S10) of assembling the first batteries in the first rack structure includes a process (S11) of preparing the first rack structure including the plurality of first transverse frames that are disposed to be spaced apart from each other in the forward/rearward direction of the construction machine, and the plurality of first longitudinal frames that connect the plurality of first transverse frames to each other and are disposed to be spaced apart from each other in the leftward/rightward direction of the construction machine, and the plurality of vertical frames that are fastened to the plurality of first transverse frames vertically thereto, a process (S12) of preparing the first batteries, in which the side brackets are fastened to the side surfaces or the opposite side surfaces thereof, a process (S13) of inserting the first batteries between sequential pairs of the first longitudinal frames, respectively, in the vertical direction, and a process (S14) of fastening the opposite sides of the first batteries to the first longitudinal frames.

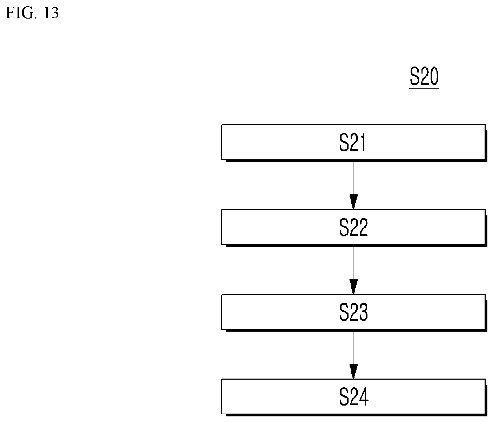

Referring to FIG. 13, the process (S20) of assembling the second batteries in the second rack structure further includes a process (S21) of preparing the second rack structure including the plurality of second transverse frames that are disposed to be spaced apart from each other in the forward/rearward direction of the construction machine, and the plurality of second longitudinal frames that connect the plurality of second transverse frames to each other and are disposed to be spaced apart from each other in the leftward/rightward direction of the construction machine, a process (S22) of preparing the second batteries, in which the side brackets are fastened to side surfaces thereof, a process (S23) of inserting the second batteries between sequential pairs of the second longitudinal frames, respectively, in the vertical direction, and a process (S24) of fastening the opposite sides of the second batteries to the second longitudinal frames.

In the battery assembly of the construction machine according to an aspect of the present disclosure, the batteries are fastened to the longitudinal frames of the rack structure laterally, and thus a possibility of damage to the batteries is reduced by preventing a load caused by an imbalance of planarity as in the conventional technology. Furthermore, even when a welding deformation occurs, a less load is applied to the batteries because a primary deformation occurs in the side brackets.

Furthermore, the entire battery assembly is mounted on the frame of the upper swing structure in the method for assembling the construction machine according to an aspect of the present disclosure, and thus assembling efficiency is improved.

The terms used herein are used only to describe specific aspects, and are not intended to limit the present disclosure. As used herein, the singular forms "a", "an", and "the" are intended to include plural forms as well, unless the context clearly indicates otherwise. As used herein, the term "and/or" includes any and all combinations of one or more of the associated listed items. Furthermore, it will be understood that, when used herein, the terms "comprises", "comprising", "includes", and/or "including" specify the presence of the mentioned features, integers, processes, operations, elements, and/or components, but do not exclude the presence or addition of one or more other features, integers, processes, operations, elements, components, and/or groups thereof.

It will be understood that the terms, such as first and second, may be used herein to describe various elements, but the elements should not be limited by the terms. The terms are used only to distinguish one element from another. For example, without departing from the scope of the present disclosure, a first element may be referred to as a second element, and similarly, the second element may be referred to as the first element.

Relative terms, such as "under" or "over" or "on an upper side of" or "on a lower side of" or "horizontal" or "vertical", may be used herein to describe the relationship between one element and another, as illustrated in the drawings. It will be understood that these terms, and the terms discussed above are intended to include different directions of a device in addition to the directions illustrated in the drawing. It will be understood that when an element is referred to as being "connected" or "coupled" to another element, the first element may be directly connected or coupled to the second element, or that intervening elements may be present therebetween. In contrast, when it is mentioned that an element is "directly connected" or "directly coupled" to another element, there are no intervening elements.

Unless otherwise defined, all the terms (including technical and scientific terms) used herein have the same meanings as those generally understood by an ordinary person skilled in the art, to which the present disclosure pertains. Furthermore, it will be understood that the terms used herein should be construed as having meanings that are consistent with their meaning in the context of this specification and the relevant art, and will not be interpreted in an idealized or an overly formal sense unless explicitly defined herein.

## Claims

1. A battery assembly of a construction machine, comprising:
a first rack structure including a plurality of first transverse frames that are fixed to a frame of an upper swing structure of the construction machine, and disposed to be spaced apart from each other in a forward/rearward direction of the construction machine, and a plurality of first longitudinal frames that connect the plurality of first transverse frames to each other, and are disposed to be spaced apart from each other in a leftward/rightward direction of the construction machine; and
first batteries mounted between sequential pairs of the first longitudinal frames, respectively,
wherein opposite sides of the first batteries are fastened to the first longitudinal frames.

2. The battery assembly of claim 1, wherein side brackets are fastened to side surfaces or opposite side surfaces of the first batteries, and
wherein the side brackets are fastened to the first longitudinal frames.

3. The battery assembly of claim 2, wherein the side brackets are fastened to side surfaces of some of the first batteries, and guide bolt holes are formed on the other side surfaces thereof,
wherein guide grooves aligned with the guide bolt holes are formed in the first longitudinal frames corresponding to the opposite side surfaces of the first batteries, and
wherein guide bolts are inserted along the guide bolt holes and the guide grooves.

4. The battery assembly of claim 1, wherein the first rack structure includes:
a plurality of vertical frames that are fastened to the plurality of first transverse frame vertically thereto.

5. The battery assembly of claim 4, comprising:
a second rack structure including a plurality of second transverse frames that are fastened to upper portions of the vertical frames and disposed to be spaced apart from each other in the forward-rearward direction of the construction machine, and a plurality of second longitudinal frames that connect the plurality of second transverse frames to each other and are disposed to be spaced apart from each other in the leftward/rightward direction of the construction machine; and
second batteries mounted between sequential pairs of the second longitudinal frames, respectively,
wherein opposite sides of the second batteries are fastened to the second longitudinal frames.

6. The battery assembly of claim 5, wherein side brackets are fastened to side surfaces of the second batteries, and
wherein the side brackets are fastened to the second longitudinal frames.

7. The battery assembly of claim 6, wherein guide bolt holes are formed on the other side surfaces of the second batteries,
wherein guide grooves aligned with the guide bolt holes are formed in the second longitudinal frames corresponding to the opposite side surfaces of the second batteries, and
wherein guide bolts are inserted along the guide bolt holes and the guide grooves.

8. The battery assembly of claim 1, wherein the first rack structure further includes:
horizontal frames that connect the first transverse frames to each other and support bottom surfaces of the first longitudinal frames.

9. A method for assembling a battery assembly of a construction machine, the method comprising:
preparing a first rack structure including a plurality of first transverse frames that are disposed to be spaced apart from each other in a forward/rearward direction of the construction machine, and a plurality of first longitudinal frames that connect the plurality of first transverse frames to each other and are disposed to be spaced apart from each other in a leftward/rightward direction of the construction machine, and a plurality of vertical frames that are fastened to the plurality of first transverse frames vertically thereto;
preparing first batteries in which side brackets are fastened to side surfaces or opposite side surfaces thereof;
inserting the first batteries between sequential pairs of the first longitudinal frames, respectively, in a vertical direction; and
fastening the opposite sides of the first batteries to the first longitudinal frames.

10. The method of claim 9, further comprising:
preparing a second rack structure including a plurality of second transverse frames that are disposed to be spaced apart from each other in the forward/rearward direction of the construction machine, and a plurality of second longitudinal frames that connect the plurality of second transverse frames to each other and are disposed to be spaced apart from each other in the leftward/rightward direction of the construction machine;
preparing second batteries in which side brackets are fastened to side surfaces thereof;
inserting the second batteries between sequential pairs of the second longitudinal frames, respectively, in the vertical direction; and
fastening opposite sides of the second batteries to the second longitudinal frames.

11. The method of claim 10, further comprising:
fastening the second transverse frames of the second rack structure to the vertical frames of the first rack structure.

12. The method of claim 11, further comprising:
assembling the first rack structure to a frame of an upper swing structure of the construction machine.
